# EUROPEAN PATENT SPECIFICATION

(11) **EP 2 923 549 B1**
(45) Date of publication and mention of the grant of the patent: **10.01.2018**
(21) Application number: 15160296.8
(22) Date of filing: 23.03.2015
(51) Int. Cl.: A01D 34/416

(54) **Quick loading trimmer head**
Schnelllade-Schneidkopf
Tête de tondeuse à charge rapide

(30) Priority: 24.03.2014 WO PCT/EP2014/055819
(43) Date of publication of application: 30.09.2015
(73) Proprietor: Husqvarna AB, 561 82 Huskvarna (SE)
(72) Inventor: Kullberg, Stefan, 554 47 Jönköping (SE)

(56) References cited:
- EP-A1- 0 271 762
- EP-A1- 0 636 307
- US-A1- 2004 134 078

## Description

### TECHNICAL FIELD

Example embodiments generally relate to an outdoor power device that employ trimmer line and, more particularly, relate to a mechanism for providing relatively easy loading of trimmer line.

### BACKGROUND

Handheld outdoor power devices such as trimmers, blowers, chainsaws, and/or the like, are often used to perform tasks relating to yard/grounds maintenance or even commercial resource harvesting activities that require them to be mobile. Although there are several options for powering such devices, including combustion engines, corded electric motors, or battery powered electric motors, each option may be viewed as having advantages in certain environments and for certain users.

Some trimming devices employ a trimmer line and are referred to as string trimmers. Alternatively, such devices may be known as edge trimmers, line trimmers, weed whips and/or the like. The trimmer line, which may be a monofilament line, is quite effective at cutting when rotated at high speed. Such a trimmer line is extended and held somewhat rigid by centrifugal forces while being rotated.
EP 0 636 307 A1 discloses a spool for a rotary cutter having a core portion for supporting at least one coil of flexible line and at least two flange portions provided with two apertures for threading the line. US 2004/0134078 A1 discloses a trimmer head for a string trimmer avoiding dissembling of the head for re-supply the trimmer with cutting string. In some cases, the trimmer line is wound upon a reel or spool and the trimmer line can be released by bumping the trimmer head on the ground during operation. However, it has been common for such devices to be somewhat difficult to load trimmer line into. Thus, operators may find it frustrating and/or difficult to replace the trimmer line. Accordingly, the user experience associated with employing such devices may suffer.

### BRIEF SUMMARY OF SOME EXAMPLES

Some example embodiments may therefore provide a trimmer device that can accommodate a structure that is relatively quick and easy to load with trimmer line. The structure may provide a spool that is substantially fixed to prevent any substantial movement in the axial (or vertical) direction, but can move in the rotational direction responsive to operation of a power unit. As such, for example, the spool may be mated with a core that can be "bumped" to release line from the spool in a manner that permits the core to move in the axial (or vertical) direction, while the spool releases line but does not substantially move in the axial (or vertical direction). The structure may provide a line channel through the core that is much longer than the portion of the spool through which line is fed in the radial direction.

In one example embodiment, a trimmer head for a hand-held cutting device is provided. The trimmer head may include a first housing portion, a line holding assembly to hold and selectively release trimmer line, and a second housing portion operably coupled to the first housing portion to house the line holding assembly. The line holding assembly may include a spool configured to hold the trimmer line and a core operably coupled to the spool. The line holding assembly may be configured such that rotational movement of the core causes corresponding movement of the spool, but movement of the core in an axial direction does not cause corresponding movement of the spool.

In another example embodiment, a hand-held cutting device is provided. The device may include an elongated member graspable along a portion thereof by an operator, a trimmer head disposed at one end of the elongated member and configured to be rotatable to perform a cutting function using trimmer line held at a portion of the trimmer head, and a power unit operably coupled to the trimmer head to selectively cause rotation of the trimmer head via turning a shaft. The trimmer head may include a first housing portion, a line holding assembly to hold and selectively release the trimmer line, and a second housing portion operably coupled to the first housing portion to house the line holding assembly. The line holding assembly may include a spool configured to hold the trimmer line and a core operably coupled to the spool. The line holding assembly may be configured such that rotational movement of the core causes corresponding movement of the spool, but movement of the core in an axial direction does not cause corresponding movement of the spool.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a perspective view of an electric powered trimmer that may be configured in accordance with an example embodiment;
FIG. 2A illustrates an exploded perspective view of a trimmer head configured in accordance with an example embodiment from above;
FIG. 2B illustrates an exploded perspective view of a trimmer head configured in accordance with an example embodiment from below;
FIG. 3A illustrates a side view of the trimmer head in accordance with an example embodiment;
FIG. 3B illustrates a cross section view of the trimmer head in accordance with an example embodiment;
FIG. 4A illustrates a cross section view along a line that bisects a line channel with the trimmer head in a normal position in accordance with an example embodiment;
FIG. 4B illustrates the cross section view of FIG. 4A with the trimmer head in a "bumped" condition in accordance with an example embodiment;
FIG. 5 illustrates a perspective view of a spool in accordance with an example embodiment;
FIG. 6 illustrates a perspective view of a core in accordance with an example embodiment;
FIG. 7 illustrates an exploded perspective view of an alternative line holding assembly from a bottom perspective in accordance with an example embodiment;
FIG. 8 illustrates an exploded perspective view of the alternative line holding assembly from a top perspective in accordance with an example embodiment;
FIG. 9 illustrates an exploded side view of the alternative line holding assembly in accordance with an example embodiment;
FIG. 10 illustrates a perspective view of the alternative line holding assembly in an assembled state accordance with an example embodiment;
FIG. 11 illustrates a side view of the alternative line holding assembly in an assembled state accordance with an example embodiment; and
FIG. 12 illustrates a cross section view of the alternative line holding assembly according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. One of skill in the art will appreciate the normal position in which devices of example embodiments are held for operation and that the working assembly represents the front of such devices. All other directional references should be understood in this general context.

Some example embodiments described herein provide a line holding assembly that can be easily molded and assembled, and that allows an operator to quickly and easily load trimmer line onto a trimmer head. In particular, some example embodiments provide a two-piece line holding assembly in which the spool and core are separate pieces to permit easy construction. In some cases, to further increase the ease of manufacturing, even the core may be split into two pieces. The parts may then be assembled, and the resultant assembly may permit movement of the core in the axial direction (e.g., to let out more line), but may prevent movement of the spool in the axial direction. Meanwhile, the core and spool may move together for rotational movements.

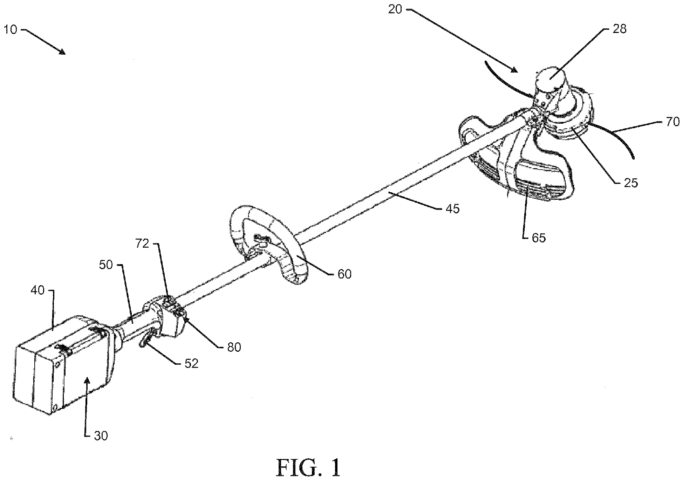

Referring to the drawings, FIG. 1 shows an electric powered trimmer 10 that may be configured in accordance with an example embodiment. However, it should be appreciated that the trimmer 10 is merely one example of an electric powered, outdoor power device that may be configured in accordance with an example embodiment. However, example embodiments could alternatively be employed in connection with corded versions of various electric powered, outdoor power devices. Moreover, in some cases, example embodiments could also be practiced in connection with combustion engines that are configured to turn an output shaft. Thus, although an example embodiment will be described hereinafter with specific reference to the battery powered trimmer 10 of FIG. 1, the applicability of alternative embodiments relative to other types of devices should be well understood.

As shown in FIG. 1, the trimmer 10 may include a working implement or working assembly 20, which in this example includes a rotatable trimmer head 25. The working assembly 20 may further include a motor (e.g., an electric motor) disposed in a housing 28 of the working assembly 20. However, for gas powered embodiments and for some electrically powered embodiments, the motor is often disposed remotely with respect to the trimmer head 25, and power is transferred to the trimmer head 25 via couplings provided in the housing 28. The motor of the trimmer 10 may be powered, according to this example, by a battery pack 30. The battery pack 30 is received into a battery compartment of the trimmer 10. It should be appreciated that the battery pack 30 and/or motor of this example form a power unit that can turn the working assembly 20. However, in other examples, the power unit may include a combustion engine or other suitable power source.

The battery compartment may be a recess or cavity formed in a casing 40 of the trimmer 10 disposed at one end of an elongated member 45 that may further include the working assembly 20 at an opposite end thereof. The elongated member 45 may be a hollow tube, pipe, rod or other such member that may be straight or curved in different embodiments. The elongated member 45 may provide operable communication between the working assembly 20 and the battery pack 30 so that the battery pack 30 can power the working assembly 20. In some embodiments, the casing 40 may be formed from one or more plastic or other rigid components that may be molded to have a desired shape. The casing 40 may substantially enclose the battery compartment, control circuitry and/or other components associated with powering and/or controlling the operation of the trimmer 10. However, it should also be appreciated that the battery pack of some alternative embodiments may be housed within a backpack that may be worn on the operator's back. In such an example, the battery pack may be connected to the trimmer 10 via a cord or other adaptor.

In an example embodiment, the trimmer 10 may include a rear handle 50 and a front handle 60. The rear handle 50 may be disposed in-line with the elongated member 45 proximate to the casing 40, while the front handle 60 may be disposed between the casing 40 and the working assembly 20 at an intermediate portion of the elongated member 45. An operator of the trimmer 10 may use one hand to hold the front handle 60 and the other hand to hold the rear handle 50 while operating the trimmer 10. In some embodiments, the rear handle 50 may include a trigger 52 or other control mechanism for engaging operation of the motor to power the working assembly 20.

Although FIG. 1 shows the front handle 60 being positioned forward of the rear handle 50 along the elongated member 45, it should also be appreciated that other arrangements for holding and operating the trimmer 10 may be provided. For example, in some cases, a "handlebar" embodiment may be provided in which the front and rear handles 60/50 are replaced by a single handle assembly attached to the elongated member 45 where both handles on the handle assembly are substantially equidistant from the working assembly 20 and disposed spaced apart from the elongated member 45 on opposites sides thereof on a handlebar assembly. Other arrangements are also possible.

The trimmer 10 may further employ a trim shield 65 that is configured to prevent cut materials and/or debris from coming back at the operator. The operator may actuate the trigger 52 to power the working assembly and turn the trimmer head 25. The trimmer head 25 may include trimmer line 70 that may extend outwardly (e.g., in a radial direction relative to a shaft forming an axis about which the trimmer head 25 rotates) from the trimmer head 25 to cut vegetation encountered thereby. The trim shield 65 may employ at least one knife element (not shown) to cut the trimmer line 70 to a length slightly less than the distance from the external periphery of the trimmer head 25 to the internal periphery of the trim shield 65 responsive to rotation of the trimmer head 25.

In an example embodiment, the motor may be a DC motor or a brushless DC motor (BLDC) that is powered by the battery pack 30. The motor may be configured to turn in either the clockwise or counterclockwise direction when a power switch 72 is powered on. In the example of FIG. 1, the power switch 72 may be provided at a control panel or control assembly 80 that may be positioned proximate to the rear handle 50. However, the control assembly 80 could be positioned at any of a number of other locations on the trimmer 10 in alternative embodiments. Moreover, it should be appreciated that gasoline powered embodiments may replace the trigger 52 with a throttle and may replace the battery pack with a gasoline engine. The general structure, however, of even such gasoline powered embodiments may generally be similar and, as indicated above, the power unit may therefore be electric or gas powered.

The rotation of the trimmer head 25 may cause the trimmer line 70 (which may be monofilament line) to stiffen extensively based on centrifugal forces applied to the trimmer line 70 during rotation. The faster the rotation, the stiffer the trimmer line 70 generally becomes. The trimmer line 70 can therefore make a good cutting tool for the cutting or trimming of most vegetation that is not substantially woody. However, it is typically inevitable that the trimmer line 70 will be worn during use. The wearing forces acting on the trimmer line 70 may cause the line to break, abrade or otherwise shorten in length over time. To re-extend the trimmer line 70 to full length, the trimmer head 25 may be "bumped" on the ground to release more trimmer line 70 (and cut it to length, if appropriate).

To provide sufficient additional trimmer line 70 to allow the "bump" operation to release line, the trimmer head 25 may be provided with a trimmer line spool upon which extra trimmer line 70 may be wound. However, even this spool would eventually run out of trimmer line 70 over time and need replenishment. In the past, the winding of more trimmer line 70 onto the spool has required some level of disassembly of the trimmer head 25. This disassembly and winding of trimmer line 70 can be cumbersome, and may be difficult to accomplish in a quick and easy manner. Accordingly, some example embodiments have been provided to improve the capability of the operator to easily and quickly replenish trimmer line 70 onto the trimmer head 25.

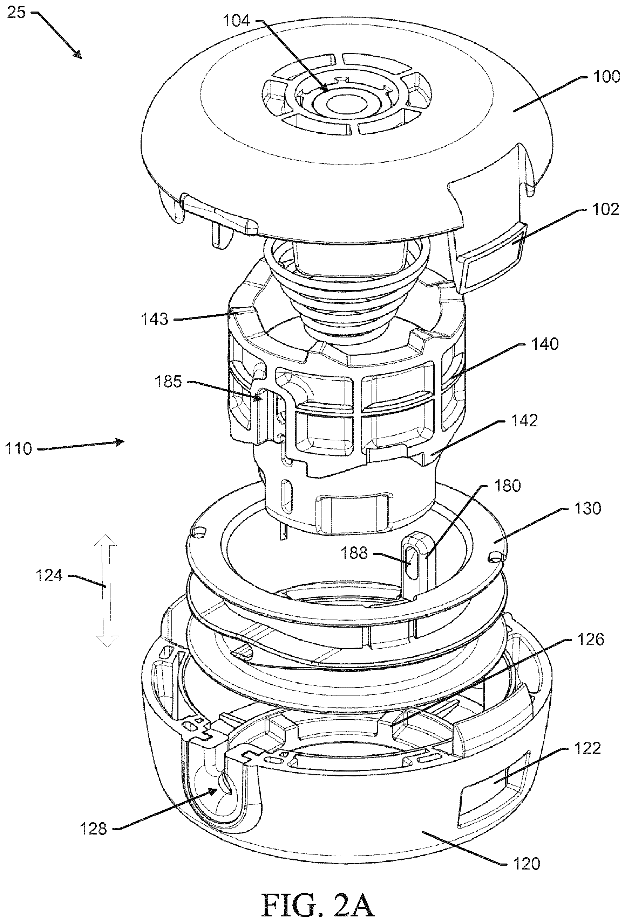

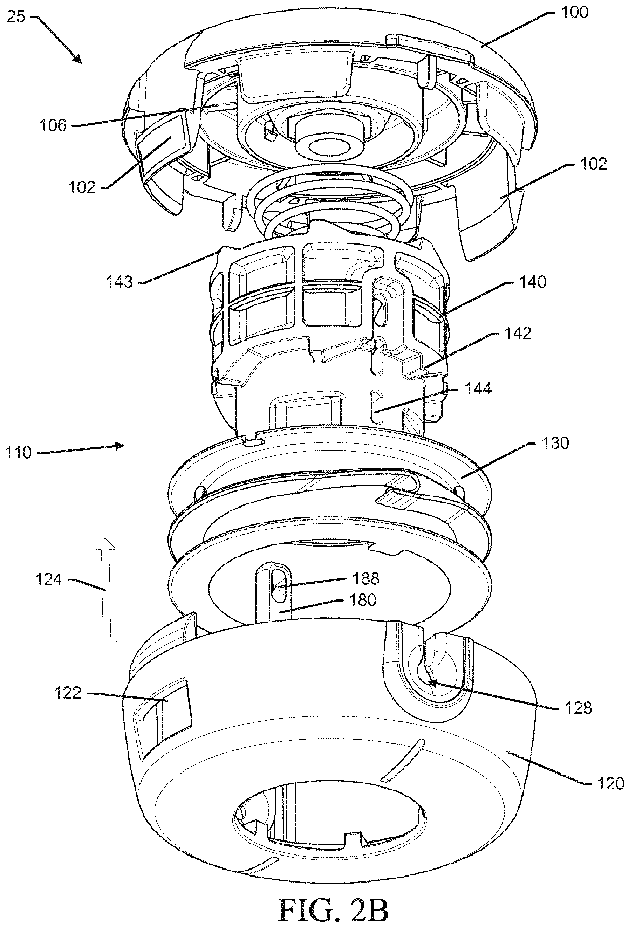

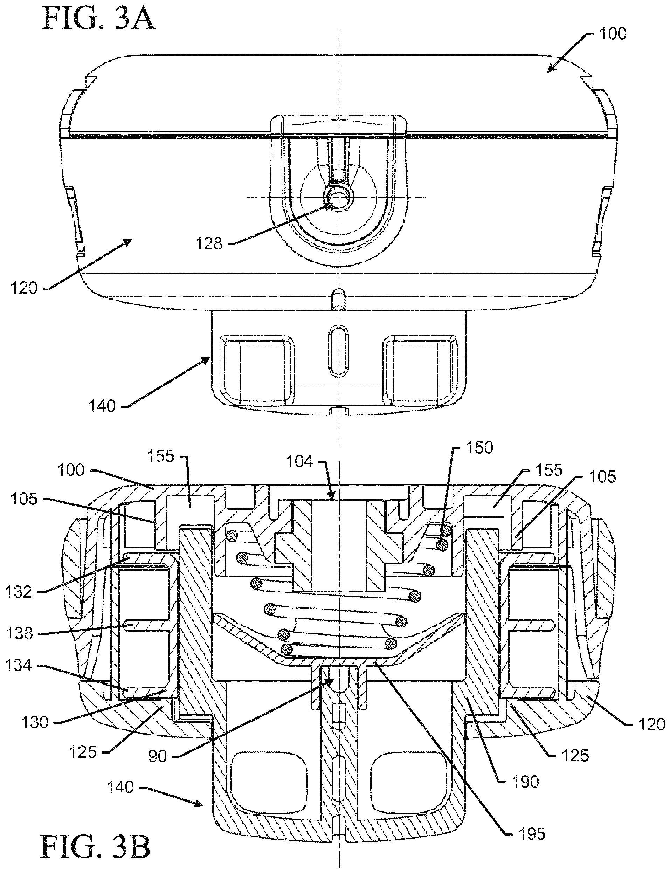

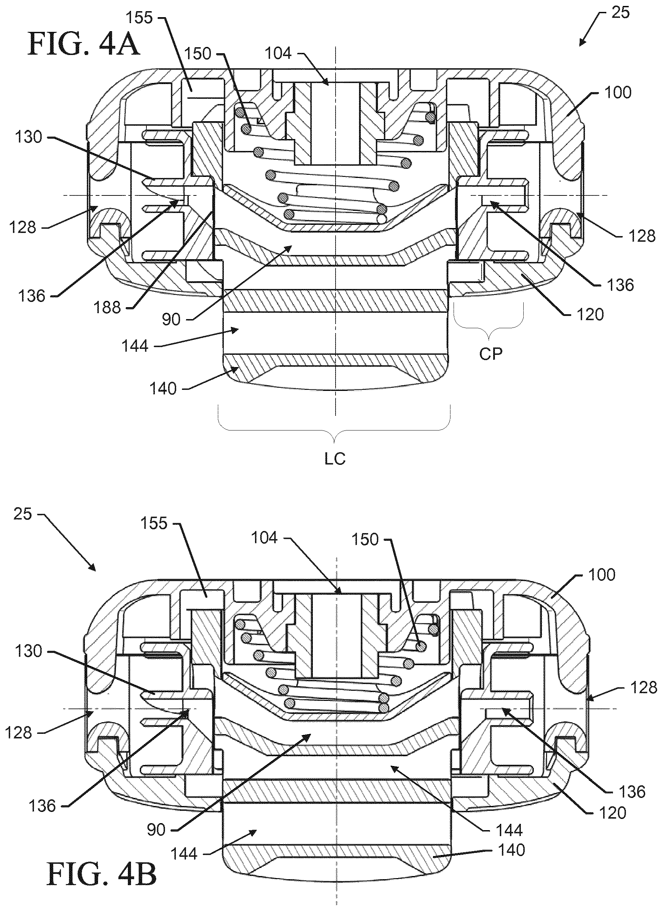

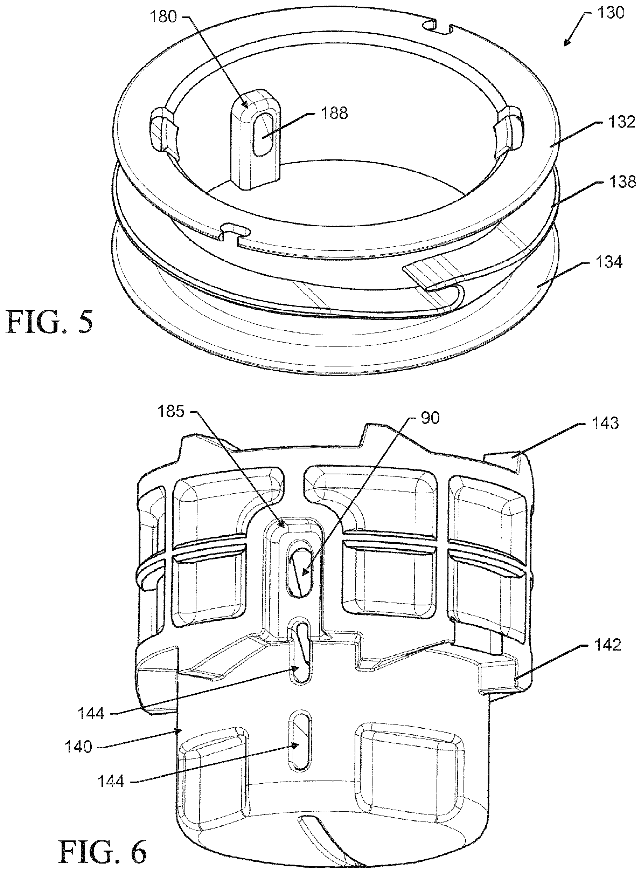

FIG. 2, which includes FIGS. 2A and 2B illustrates an exploded perspective view of the trimmer head 25 of an example embodiment from above (FIG. 2A) and below (FIG.2B) perspectives. FIG. 3, which includes FIGS. 3A and 3B, illustrates a side view and cross section view of the trimmer head 25 of an example embodiment. The orientation of the trimmer head 25 in FIGS. 3A and 3B is such that the observer is looking into a line channel 90 through which trimmer line is passed prior to being wound onto a spool 130 of the device. FIG. 4, which includes FIGS. 4A and 4B, illustrates cross section views taking along a line that bisects the line channel 90. FIG. 4A shows the trimmer head 25 in a normal position and FIG. 4B shows the trimmer head 25 in a "bumped" condition. FIG. 5 illustrates a perspective view of the spool 130 in accordance with an example embodiment, and FIG. 6 illustrates a perspective view of a core 140 in accordance with an example embodiment.

As shown in FIGS. 2-6, the trimmer head 25 may include a first housing portion 100, a line holding assembly 110 to hold and selectively release trimmer line (not shown in FIG. 2-6), and a second housing portion 120. The second housing portion 120 may be operably coupled to the first housing portion 100 to house the line holding assembly 110. In an example embodiment, the first and second housing portions 100 and 120 may be snap fit together, fastened with one or more screws or other fastening members, and/or latched together. In the example of FIG. 2, the first housing portion 100 may include tabs 102 that snap fit into corresponding tab receivers 122 of the second housing portion 120. Generally speaking, the first housing portion 100 may be disposed on top of the second housing portion 120, which may be disposed on the bottom of the assembly. The terms top and bottom in this context are relative to the normal way the trimmer 10 is held with the bottom being closest to the ground.

The line holding assembly may include the spool 130 configured to hold the trimmer line and the core 140 operably coupled to the spool 130 such that rotational movement of the core 140 causes corresponding movement of the spool 130, but movement of the core in an axial direction (indicated by arrow 124) does not cause corresponding movement of the spool 130. The first housing 100 may include a coupling portion 104 that may be operably coupled to a shaft that is turned by the power unit. However, in some embodiments, the shaft may be operably coupled to the core 140. In either case, the power unit may ultimately cause the core 140 to turn and, relative to rotational movement, the core 140 may then turn the spool 130 as well.

A biasing element (e.g., spring 150) may be provided between the first housing portion 100 and the core 140 to bias the core 140 downward in the axial direction. When a "bump" operation is conducted by tapping the core 140 on the ground, the core 140 may move upward against the force of the spring 150 to enable the centrifugal force on the trimmer line during the rotation of the spool 130 relative to the second housing portion 120 to cause the spool 130 to release trimmer line. In particular, the second housing portion 120 may include one or more detents 126 that may lie in registration with one or more corresponding slide projections 142 on the core 140. Meanwhile, the first housing portion 100 may include similar detents 106 that may lie in registration with slide projections 143 disposed facing upwardly from the external periphery of the core 140. However, it should be appreciated that in alternative structures, the locations of the detents (106 and 126) and slide projections (142 and 143) could be reversed. The slide projections 142 may typically engage the detents 126 to prevent movement of the core 140 relative to the second housing portion 120 while the spring 150 pushes the slide projections 142 and the detents 126 into contact with each other. When the operator taps the core 140 on the ground, the force of the spring 150 may be overcome momentarily to enable the slide projections 142 to disengage the detents 126 and rotate the core 140 (and spool 130) relative to the second housing portion 120 to allow trimmer line to be released from the spool 130 through orifices 128 on the second housing portion 120. Meanwhile, the slide projections 143 may catch the next set of detents 106 to limit the amount of relative motion between the housings and the core 140.

As can be seen in FIG. 3B, the first housing portion 100 may include spool stays 105 disposed above the spool 130. Similarly, the second housing portion 120 may include spool stays 125 to combine with the spool stays 105 on the first housing portion 100 to limit movement of the spool 130 in the axial direction. Meanwhile, the core 140 may fit inside the spool 130 and have room to move in the axial direction within a core channel 155 that is shown to have room at the top to accommodate upward movement of the core 140 in the axial direction.

Referring specifically to FIGS. 4A and 4B, the line channel 90 may extend through the core 140 in a radial direction to receive the trimmer line fed therethrough. Although it should be appreciated that in some embodiments, the line channel 90 may be part of the spool 130. Regardless, in some cases, the line channel 90 may include at least one bend along a length thereof. The bend may extend in the axial direction away from the spring 150. In some cases, the line channel 90 may have a same width in the axial direction over an entirety of the line channel 90. However, in some embodiments, the line channel 90 has a first width in the axial direction over a mid portion of the line channel 90, and the line channel may expand to a second width in the axial direction proximate to each of the opposing ends of the line channel 90. As shown in FIG. 4, the core 140 may have additional hollow channels 144 that serve to reduce the overall weight of the core 140. When the embodiment of FIG 4A is "bumped", the core channel 155 enables the core 140 to move upward to reduce the free volume at the top of the core channel 155 as shown in FIG. 4B.

In some embodiments, the spool 130 may include a first flange 132 and a second flange 134 that extend in respective planes that are substantially parallel to each other and substantially perpendicular to the axial direction. The trimmer line extending out from opposing ends of the line channel 90 may be fed through channel portions 136 disposed to pass through the spool 130 in the radial direction. The channel portions 136 may terminate at the internal periphery of the spool 130 at respective line orifices 188. The line orifices 188 may be aligned in registration with the ends of the line channel 90. Trimmer line fed through the line channel 90, the line orifices 188 and the channel portions 136 may then be wound onto the spool between the first and second flanges 132 and 134 responsive to rotation of the core 140 about the axis of the core by the operator. For example, the core 140 may have grip portions to allow the operator to grasp the grip portions and manually turn the core 140 (and therefore also turn the spool 130) to wind trimmer line onto the spool 130. The spool 130 of some embodiments may also include a third flange 138 disposed between the first and second flanges 132 and 134 to divide the spool 130 into a top line receiving portion and a bottom line receiving portion. In such an example, the top line receiving portion may receive the trimmer line exiting one end of the line channel 90 and the bottom line receiving portion may receive trimmer line exiting the other end of the line channel 90.

As mentioned above, the core 140 may be movable in the axial direction to release trimmer line from the spool 130, but the spool 130 does not substantially move in the axial direction when the core 140 moves in the axial direction. Thus, although the spool 130 is affixed to the core 140 to move in registration therewith responsive to rotational movement of the core 140, the spool 130 is enabled to slide over the surface of the core 140 when the core 140 moves in the axial direction. The channel portions 136 of the spool 130 that are proximate to the ends of the line channel 90 (i.e., at location of the line orifices 188) may be wider to ensure that some portion of the channel portions 136 stays in alignment with the line channel 90 even when the core 140 moves axially (e.g., responsive to a bump operation).

To maintain the spool 130 and core 140 in registration with each other for rotational movement, while still permitting relative motion between the two in the axial direction, the spool 130 may be annularly shaped to define an inner periphery that is slightly larger than the external periphery of the core 140 (which may be generally cylindrical in shape at the area of overlap with the spool 130). The spool 130 may therefore slidably engage the outer periphery of a portion of the core 140 to permit relative movement of the core 140 in the axial direction. However, it should be appreciated that the spool 130 and the core 140 could alternatively have other shapes that are substantially matched to permit slidable engagement in the axial direction. For example, hexagonal, octagonal or other shapes may be employed. In an example embodiment, the inner periphery of the spool 130 may be provided with a vertical protrusion 180. Meanwhile, the external periphery of the core 140 may be provided with a vertical channel 185 that is slightly larger in size (but substantially similarly shaped) compared to the vertical protrusion 180. When the core 140 is bumped to move in the axial direction, the vertical protrusion 180 may be configured to ride in the vertical channel 185.

In some embodiments, a length of the line channel LC may be longer than a combined length of extension of the channel portions 136 on each respective opposing side of the spool. Thus, the length of each channel portion 136 may be a length CP and LC may be greater than 2xCP.

In some embodiments, the core 140, the spool 130, and/or the first and second housing portions 100 and 120 may be made of hard plastic or some other rigid material. Thus, in some cases, the core 140, the spool 130, and/or the first and second housing portions 100 and 120 may be molded components. However, to facilitate easier formation of the line channel 90, the core may sometimes be formed in two parts. Thus, for example, a core base 190 may be molded as one piece and a core insert 195 may be separately molded to fit into the core base 190 to define the line channel 90. In particular, the core insert 195 may form top portion of the line channel 90 and may be separable from the core base 190, which may form the bottom portion of the line channel 90 as shown in FIG. 3B.

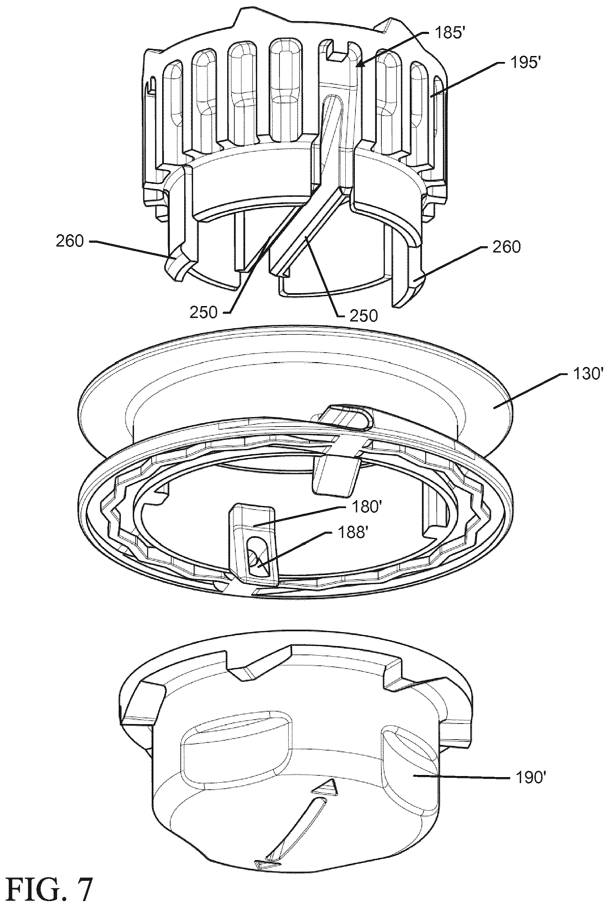

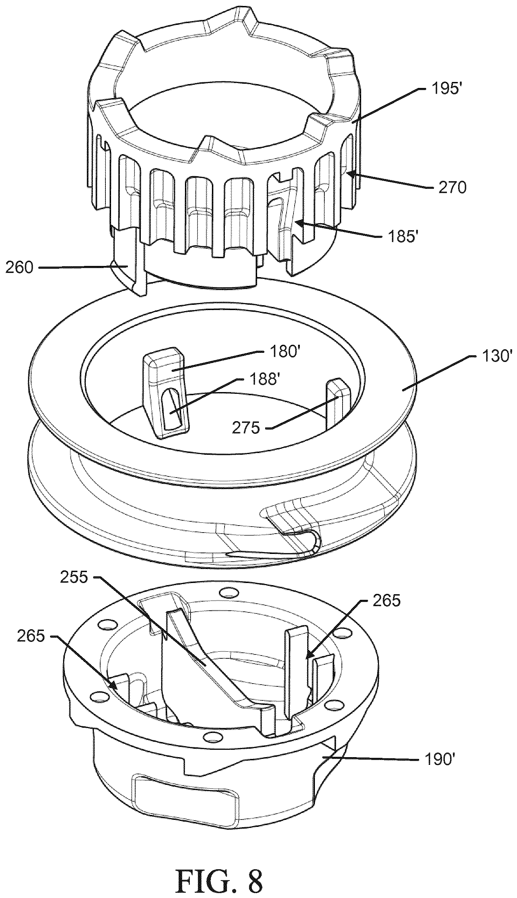

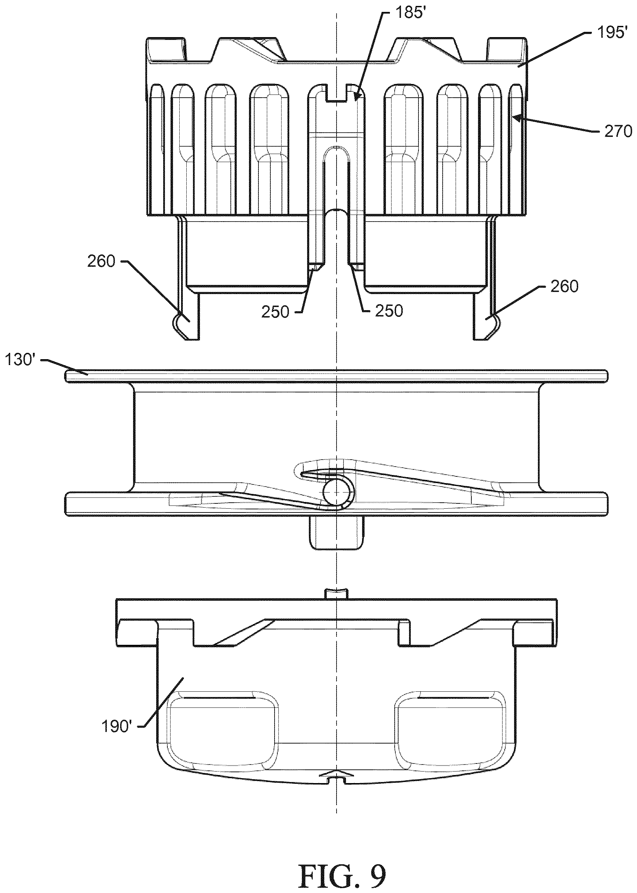

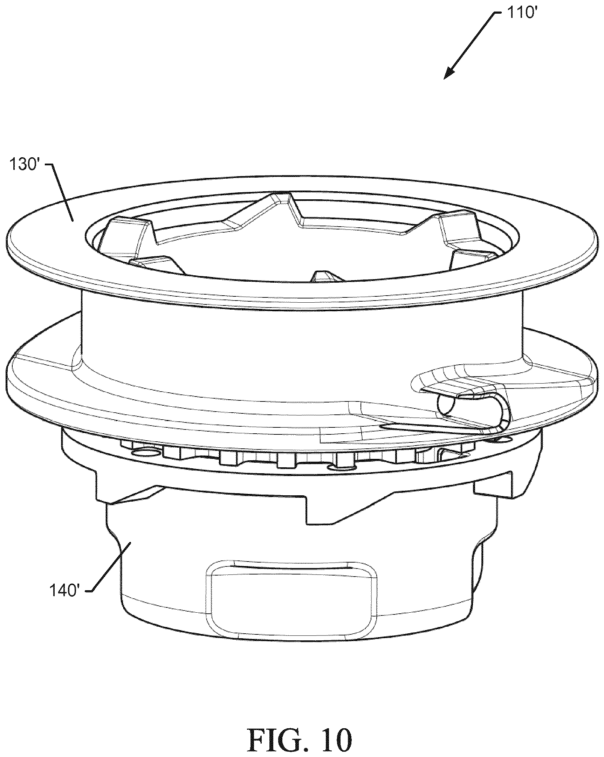

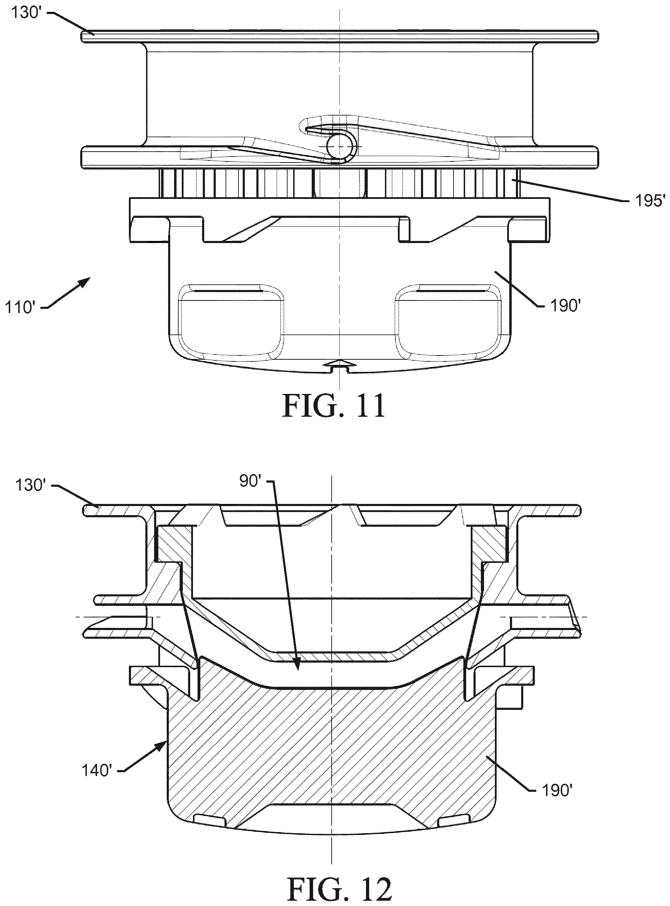

The specific structures shown in FIGS. 2-6 illustrate one example embodiment. However, other specific structures may be used to embody the same inventive concepts. In this regard, FIGS. 7-12 illustrate an alternative core and/or spool structure that could be employed in some embodiments. As such, the example of FIGS. 7-12 represents an alternative line holding assembly 110'. FIGS. 7 and 8 represent exploded perspective views of the line holding assembly 110' from opposing perspectives and FIG. 9 illustrates an exploded side view of the line holding assembly 110'. FIG. 10 illustrates a perspective view of the line holding assembly 110' in an assembled state, and FIGS. 11 and 12 illustrate an assembled state, side view and cross section view, respectively.

The line holding assembly 110' may generally be inserted into the first housing portion 100 and second housing portion 120 described above, and the operation of the line holding assembly 110' may be substantially similar to the operations described above. However, the line holding assembly 110' of this example may include a two-piece core 140'. If desired, the line holding assembly 110' may employ a spool 130' having only two flanges (and therefore only one line receiving portion). The spool 130' may still include a line orifice 188' formed in a vertical protrusion 180' on the internal periphery of the spool 130' Moreover, the vertical protrusion 180' may be configured to ride in a vertical channel 185' on a portion of the core 140'.

The line holding assembly 110' may also include a line channel 90'. However, the line channel 90' may be formed by a top part (i.e., core insert 195') that defines sidewalls 250 and a top for the line channel 90' and a bottom part (i.e., core base 190') that defines a base 255 of the line channel 90'. The core insert 195' may further include protrusions 260 that may be configured to snap into corresponding receivers 265 disposed in the core base 190'. In some cases, the external periphery of the core insert 195' may further include one or more stabilizer channels 270 that may be configured to mate with corresponding one or more stabilizer protrusions 275 at an internal periphery of the spool 130'. The mating of the stabilizer channels and protrusions may prevent the spool from wobbling relative to the core 140'.

In accordance with an example embodiment, a hand-held cutting device is provided. The device may include an elongated member graspable along a portion thereof by an operator, a trimmer head disposed at one end of the elongated member and configured to be rotatable to perform a cutting function using trimmer line held at a portion of the trimmer head, and a power unit operably coupled to the trimmer head to selectively cause rotation of the trimmer head via turning a shaft. The trimmer head may include a first housing portion, a line holding assembly to hold and selectively release the trimmer line, and a second housing portion operably coupled to the first housing portion to house the line holding assembly. The line holding assembly may include a spool configured to hold the trimmer line and a core operably coupled to the spool. The line holding assembly may be configured such that rotational movement of the core causes corresponding movement of the spool, but movement of the core in an axial direction does not cause corresponding movement of the spool. Some example embodiments may allow loading of trimmer line without opening the trimmer head in a simple and fast manner. Still example embodiments may generally not require a significant increase in part count, and may be useable regardless of the direction of rotation of the trimmer head (or even for dual direction trimmer heads). Example embodiments may be useful for holding line of different diameters and prevent axial movement of the spool (and the trimmer line) relative to the eyelets (i.e., orifices 128 on the second housing portion 120) on the trimmer head when a bump operation occurs or during reloading. Thus, the line may be less likely to be caught between the spool and the eyelet, and the line is also less likely to end up on the wrong side of a middle flange of the spool.

The device or trimmer head of some embodiments may include additional features that may be optionally added. For example, in some embodiments, (1) the first housing portion is operably coupled to the shaft and turns responsive to operation of the power unit. In an example embodiment, (2) the core comprises a line channel extending through the core in a radial direction to receive the trimmer line fed therethrough. In some embodiments, (3) the spool comprises a first flange and a second flange that extend in respective planes that are substantially parallel to each other and substantially perpendicular to the axial direction, and wherein the trimmer line extends out from opposing ends of the line channel and through channel portions in the spool to be wound onto the spool between the first and second flanges responsive to rotation of the core about the axial direction by the operator. In some cases, (4) the spool comprises a third flange disposed between the first and second flanges to divide the spool into a top line receiving portion and a bottom line receiving portion, and wherein the top line receiving portion receives trimmer line exiting one end of the line channel and the bottom line receiving portion receives trimmer line exiting the other end of the line channel. In an exemplary embodiment, (5) the line channel has a first width in the axial direction over a mid portion of the line channel, and wherein the line channel expands to a second width in the axial direction proximate to each of the opposing ends of the line channel. In some embodiments, (6) the line channel has a same width in the axial direction over an entirety of the line channel. In some examples, (7) the core is movable in the axial direction to release trimmer line from the spool, but the spool does not substantially move in the axial direction responsive to movement of the core in the axial direction. In some cases, (8) the spool is annularly shaped defining an inner periphery that slidably engages an outer periphery of a portion of the core relative to movement of the core in the axial direction. In an example embodiment, (9) the inner periphery of the spool comprises a vertical protrusion configured to ride in a corresponding vertical channel formed at the outer periphery of the core.

In some embodiments, any or all of (1) to (9) may be employed in addition to the optional modifications or augmentations described below. For example, in some embodiments, ends of the line channel are aligned with a line orifice on each respective opposing side of the spool. Alternatively or additionally, a length of the line channel is longer than a combined length of extension of the line orifice on each respective opposing side of the spool. Alternatively or additionally, the core comprises a top portion forming a top of the line channel and a separable bottom portion forming a bottom of the line channel. Alternatively or additionally, the device is a trimmer or edger. Alternatively or additionally, the power unit comprises an electric motor or a gasoline engine. Alternatively or additionally, the line channel includes at least one bend along a length thereof, the bend extending in the axial direction.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are to be limited to the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments.

## Claims

1. A trimmer head (25) for a hand-held cutting device (10), the trimmer head (25) comprising:
a first housing portion (100);
a line holding assembly (110, 110') to hold and selectively release trimmer line (70); and
a second housing portion (120) operably coupled to the first housing portion (100) to house the line holding assembly (110, 110'),
the line holding assembly (110, 110') includes a spool (130, 130') configured to hold the trimmer line (70) and a core (140, 140') operably coupled to the spool (130, 130'),
the line holding assembly (110, 110') is configured such that the spool (130, 130') is affixed to the core (140, 140') to move responsive to rotational movement of the core (140,140') **characterized in that** the spool (130, 130') is enabled to slide over the surface of the core (140, 140') when the core (140, 140') moves in the axial direction.

2. The trimmer head (25) of claim 1, wherein the first housing portion (100) is operably coupled to a shaft of the device (10) and turns responsive to operation of a power unit of the device (10).

3. The trimmer head (25) of claim 1, wherein a biasing element (150) is provided between the first housing portion (100) and the core (140) to bias the core (140) downward in the axial direction, wherein when tapping the core (140) on the ground, the core (140) is moved upward against the force of the biasing element (150) to enable the centrifugal force on the trimmer line during the rotation of the spool (130) relative to the second housing portion (120) to cause the spool (130) to release trimmer line.

4. The trimmer head (25) of claim 1, wherein the core (140, 140') comprises a line channel (90, 90') extending through the core (140, 140') in a radial direction to receive the trimmer line (70) fed therethrough.

5. The trimmer head (25) of claim 4, wherein the spool (130,130') comprises a first flange (132) and a second flange (134) that extend in respective planes that are substantially parallel to each other and substantially perpendicular to the axial direction (124), and wherein the trimmer line (70) extends out from opposing ends of the line channel (90) and through channel portions (136) in the spool (130) to be wound onto the spool (130,130') between the first and second flanges (132, 134) responsive to rotation of the core (140,140') about the axial direction (124) by the operator.

6. The trimmer head (25) of claim 5, wherein the spool (130) comprises a third flange (138) disposed between the first and second flanges (132, 134) to divide the spool (130) into a top line receiving portion and a bottom line receiving portion, and wherein the top line receiving portion receives trimmer line (70) exiting one end of the line channel (90) and the bottom line receiving portion receives trimmer line (70) exiting the other end of the line channel (90).

7. The trimmer head (25) of claim 4, wherein the line channel (90, 90') has a first width in the axial direction (124) over a mid-portion of the line channel (90, 90'), and wherein the line channel (90, 90') expands to a second width in the axial direction (124) proximate to each of the opposing ends of the line channel (90, 90').

8. The trimmer head (25) of claim 4, wherein the line channel (90, 90') has a same width in the axial direction (124) over an entirety of the line channel (90, 90').

9. The trimmer head (25) of claim 1, wherein the core (140, 140') is movable in the axial direction (124) to release trimmer line (70) from the spool (130, 130'), but the spool (130, 130') does not substantially move in the axial direction (124) responsive to movement of the core (140, 140') in the axial direction (124).

10. The trimmer head (25) of claim 1, wherein the spool (130, 130') is annularly shaped defining an inner periphery that slidably engages an outer periphery of a portion of the core (140, 140') relative to movement of the core (140, 140') in the axial direction (124).

11. The trimmer head (25) of claim 1, wherein the inner periphery of the spool (130, 130') comprises a vertical protrusion (180) configured to ride in a corresponding vertical channel (185) formed at the outer periphery of the core (140, 140').

12. The trimmer head (25) of any of claims 4 to 8, wherein ends of the line channel (90) are aligned with a line orifice (188) on each respective opposing side of the spool (130, 130'), the line orifice (188) leading to the channel portions (136).

13. The trimmer head (25) of claim 12, wherein a length of the line channel (90, 90') is longer than a combined length of extension of the channel portions (136) on each respective opposing side of the spool (130, 130').

14. The trimmer head (25) of any of claims 1 to 11, wherein the core (140, 140') comprises a top portion (195) forming a top of the line channel (90, 90') and a separable bottom portion (190) forming a bottom of the line channel (90, 90').

15. The trimmer head (25) of any of claims 4 to 8, wherein the line channel (90, 90') includes at least one bend along a length thereof, the bend extending in the axial direction (124).

16. The trimmer head (25) of any of claims 1 to 15, wherein the spool (130, 130') and the core (140, 140') have hexagonal, octagonal or other shapes that are substantially matched to permit slidable engagement in the axial direction.

17. The trimmer head (25) of any of claims 1 to 16, wherein the line holding assembly (110') includes a two-piece core (140').

18. A hand-held cutting device (10) comprising:
an elongated member (45) graspable along a portion thereof by an operator;
a trimmer head (25) disposed at one end of the elongated member (45) and configured to be rotatable to perform a cutting function using trimmer line (70) held at a portion of the trimmer head (25); and
a power unit operably coupled to the trimmer head (25) to selectively cause rotation of the trimmer head (25) via turning a shaft, **characterized in that** the trimmer head (25) is the trimmer head according to any of claims 1 to 17.

## Patentansprüche

1. Trimmerkopf (25) für eine in der Hand gehaltene Schneidvorrichtung (10), wobei der Trimmerkopf (25) umfasst:
einen ersten Gehäuseabschnitt (100);
eine Fadenhalteanordnung (110, 110'), um den Trimmerfaden (70) zu halten und selektiv freizugeben; und
einen zweiten Gehäuseabschnitt (120), der operativ mit dem ersten Gehäuseabschnitt (100) gekoppelt ist, um die Fadenhalteanordnung (110, 110') unterzubringen,
wobei die Fadenhalteanordnung (110, 110') eine Spule (130, 130') umfasst, die ausgestaltet ist, um den Trimmerfaden (70) zu halten, sowie einen Kern (140, 140'), der operativ mit der Spule (130, 130') gekoppelt ist,
wobei die Fadenhalteanordnung (110, 110') so ausgestaltet ist, dass die Spule (130, 130') an dem Kern (140, 140') fixiert ist, um sich in Ansprechen auf die Drehbewegung des Kerns (140, 140') zu bewegen, **dadurch gekennzeichnet, dass** die Spule (130, 130') in der Lage ist, über die Oberfläche des Kerns (140, 140') zu gleiten, wenn sich der Kern (140, 140') in der axialen Richtung bewegt.

2. Trimmerkopf (25) nach Anspruch 1, wobei der erste Gehäuseabschnitt (100) operativ mit einer Welle der Vorrichtung (10) gekoppelt ist und sich in Ansprechen auf die Betätigung einer Leistungseinheit der Vorrichtung (10) dreht.

3. Trimmerkopf (25) nach Anspruch 1, wobei ein Vorspannelement (150) zwischen dem ersten Gehäuseabschnitt (100) und dem Kern (140) vorgesehen ist, um den Kern (140) in die axiale Richtung nach unten vorzuspannen, wobei, wenn der Kern (140) auf den Boden gedrückt wird, der Kern (140) gegen die Kraft des Vorspannelements (150) nach oben bewegt wird, um der Zentrifugalkraft auf den Trimmerfaden während der Drehung der Spule (130) relativ zu dem zweiten Gehäuseabschnitt (120) zu ermöglichen, die Spule (130) zu veranlassen, Trimmerfaden freizugeben.

4. Trimmerkopf (25) nach Anspruch 1, wobei der Kern (140, 140') einen Fadenkanal (90, 90') umfasst, der sich durch den Kern (140, 140') in eine Radialrichtung erstreckt, um den durch diesen hindurchgeführten Trimmerfaden (70) aufzunehmen.

5. Trimmerkopf (25) nach Anspruch 4, wobei die Spule (130, 130') einen ersten Flansch (132) und einen zweiten Flansch (134) umfasst, die sich in jeweiligen Ebenen erstrecken, die im Wesentlichen parallel zueinander sind und sich im Wesentlichen senkrecht auf die axiale Richtung (124) erstrecken, und wobei der Trimmerfaden (70) sich aus entgegengesetzten Enden des Fadenkanals (90) heraus und durch Kanalabschnitte (136) in der Spule (130) hindurch erstreckt, um in Ansprechen auf die Drehung des Kerns (140, 140') um die axiale Richtung (124) durch den Bediener auf die Spule (130, 130') zwischen dem ersten und zweiten Flansch (132, 134) aufgewickelt zu werden.

6. Trimmerkopf (25) nach Anspruch 5, wobei die Spule (130) einen dritten Flansch (138) umfasst, der zwischen dem ersten und zweiten Flansch (132, 134) angeordnet ist, um die Spule (130) in einen oberen Fadenaufnahmeabschnitt und einen unteren Fadenaufnahmeabschnitt zu unterteilen, und wobei der obere Fadenaufnahmeabschnitt den Trimmerfaden (70) aufnimmt, der aus einem Ende des Fadenkanals (90) austritt, und der untere Fadenaufnahmeabschnitt den Trimmerfaden (70) aufnimmt, der aus dem anderen Ende des Fadenkanals (90) austritt.

7. Trimmerkopf (25) nach Anspruch 4, wobei der Fadenkanal (90, 90') über einen Mittelabschnitt des Fadenkanals (90, 90') eine erste Breite in der axialen Richtung (124) aufweist, und wobei der Fadenkanal (90, 90') sich in der axialen Richtung (124) proximal zu jedem der entgegengesetzten Enden des Fadenkanals (90, 90') auf eine zweite Breite erweitert.

8. Trimmerkopf (25) nach Anspruch 4, wobei der Fadenkanal (90, 90') in der axialen Richtung (124) über die Gesamtheit des Fadenkanals (90, 90') dieselbe Breite aufweist.

9. Trimmerkopf (25) nach Anspruch 1, wobei der Kern (140, 140') in der axialen Richtung (124) beweglich ist, um den Trimmerfaden (70) von der Spule (130, 130') freizugeben, die Spule (130, 130') sich in Ansprechen auf die Bewegung des Kerns (140, 140') in der axialen Richtung (124) jedoch im Wesentlichen nicht in der axialen Richtung (124) bewegt.

10. Trimmerkopf (25) nach Anspruch 1, wobei die Spule (130, 130') ringförmig gestaltet ist und einen inneren Umfang definiert, der gleitend mit einem äußeren Umfang eines Abschnitts des Kerns (140, 140') relativ zu der Bewegung des Kerns (140, 140') in der axialen Richtung (124) in Eingriff gelangt.

11. Trimmerkopf (25) nach Anspruch 1, wobei der innere Umfang der Spule (130, 130') einen vertikalen Vorsprung (180) umfasst, der dazu ausgestaltet ist, in einem entsprechenden vertikalen Kanal (185) zu laufen, der in dem äußeren Umfang des Kerns (140, 140') ausgebildet ist.

12. Trimmerkopf (25) nach einem der Ansprüche 4 bis 3, wobei Enden des Fadenkanals (90) mit einer Fadenöffnung (188) an jeder der entgegengesetzten Seiten der Spule (130, 130') ausgerichtet sind, wobei die Fadenöffnung (188) zu den Kanalabschnitten (136) führt.

13. Trimmerkopf (25) nach Anspruch 12, wobei eine Länge des Fadenkanals (90, 90') länger ist als eine kombinierte Erstreckungslänge der Kanalabschnitte (136) an jeder der jeweiligen entgegengesetzten Seiten der Spule (130, 130').

14. Trimmerkopf (25) nach einem der Ansprüche 1 bis 11, wobei der Kern (140, 140') einen oberen Abschnitt (195) umfasst, der eine Oberseite des Fadenkanals (90, 90') bildet, sowie einen abtrennbaren unteren Abschnitt (190), der eine Unterseite des Fadenkanals (90, 90') bildet.

15. Trimmerkopf (25) nach einem der Ansprüche 4 bis 8, wobei der Fadenkanal (90, 90') zumindest eine Kurve entlang einer Länge desselben umfasst, wobei die Kurve sich in der axialen Richtung (124) erstreckt.

16. Trimmerkopf (25) nach einem der Ansprüche 1 bis 15, wobei die Spule (130, 130') und der Kern (140, 140') eine sechseckige, achteckige oder andere Gestalten aufweisen, die im Wesentlichen aufeinander abgestimmt sind, um einen gleitenden Eingriff in der axialen Richtung zu erlauben.

17. Trimmerkopf (25) nach einem der Ansprüche 1 bis 16, wobei die Fadenhalteanordnung (110') einen zweiteiligen Kern (140') umfasst.

18. In der Hand gehaltene Schneidvorrichtung (10), die Folgendes umfasst:
ein längliches Element (45), das von einem Bediener entlang eines Abschnittes davon ergriffen werden kann;
einen Trimmerkopf (25), der an einem Ende des länglichen Elements (45) angeordnet und dazu ausgestaltet ist, drehbar zu sein, um eine Schneidfunktion unter Verwendung eines Trimmerfadens (70) auszuführen, der an einem Abschnitt des Trimmerkopfs (25) gehalten wird; und
eine Leistungseinheit, die operativ mit dem Trimmerkopf (25) gekoppelt ist, um selektiv die Drehung des Trimmerkopfs (25) durch Drehen einer Welle zu veranlassen, **dadurch gekennzeichnet, dass** der Trimmerkopf (25) der Trimmerkopf nach einem der Ansprüche 1 bis 17 ist.

## Revendications

1. Tête de tondeuse (25) pour un dispositif de coupe tenu à la main (10), la tête de tondeuse (25) comprenant :
une première partie de boîtier (100) ;
un ensemble de maintien de fil (110, 110') pour maintenir et libérer sélectivement un fil de tondeuse (70) ; et
une deuxième partie de boîtier (120) couplée de manière fonctionnelle à la première partie de boîtier (100) pour recevoir l'ensemble de maintien de fil (110, 110'),
l'ensemble de maintien de fil (110, 110') comporte une bobine (130, 130') configurée pour maintenir le fil de tondeuse (70) et un noyau (140, 140') couplé de manière fonctionnelle à la bobine (130, 130'),
l'ensemble de maintien de fil (110, 110') est configuré de sorte que la bobine (130, 130') soit fixée au noyau (140, 140') pour se déplacer en réponse à un mouvement de rotation du noyau (140, 140') **caractérisée en ce que** la bobine (130, 130') est autorisée à glisser sur la surface du noyau (140, 140') lorsque le noyau (140, 140') se déplace dans la direction axiale.

2. Tête de tondeuse (25) de la revendication 1, dans laquelle la première partie de boîtier (100) est couplée de manière fonctionnelle à un arbre du dispositif (10) et tourne en réponse au fonctionnement d'une unité d'alimentation du dispositif (10).

3. Tête de tondeuse (25) de la revendication 1, dans laquelle un élément de sollicitation (150) est prévu entre la première partie de boîtier (100) et le noyau (140) pour solliciter le noyau (140) vers le bas dans la direction axiale, où, en frappant le noyau (140) sur le sol, le noyau (140) est déplacé vers le haut contre la force de l'élément de sollicitation (150) pour permettre à la force centrifuge sur le fil de tondeuse pendant la rotation de la bobine (130) par rapport à la deuxième partie de boîtier (120) d'amener la bobine (130) à libérer le fil de tondeuse.

4. Tête de tondeuse (25) de la revendication 1, dans laquelle le noyau (140, 140') comprend un canal de fil (90, 90') s'étendant à travers le noyau (140, 140') dans une direction radiale pour recevoir le fil de tondeuse (70) acheminé à travers celui-ci.

5. Tête de tondeuse (25) de la revendication 4, dans laquelle la bobine (130, 130') comprend une première bride (132) et une deuxième bride (134) qui s'étendent dans des plans respectifs qui sont essentiellement parallèles l'un à l'autre et essentiellement perpendiculaires à la direction axiale (124), et dans laquelle le fil de tondeuse (70) s'étend à partir des extrémités opposées du canal de fil (90) et à travers des parties de canal (136) dans la bobine (130) pour être enroulé sur la bobine (130, 130') entre les première et deuxième brides (132, 134) en réponse à la rotation du noyau (140, 140') autour de la direction axiale (124) par l'opérateur.

6. Tête de tondeuse (25) de la revendication 5, dans laquelle la bobine (130) comprend une troisième bride (138) disposée entre les première et deuxième brides (132, 134) pour diviser la bobine (130) en une partie supérieure de réception de fil et en une partie inférieure de réception de fil, et dans laquelle la partie supérieure de réception de fil reçoit un fil de tondeuse (70) sortant d'une extrémité du canal de fil (90) et la partie inférieure de réception de fil reçoit le fil de tondeuse (70) sortant de l'autre extrémité du canal de fil (90).

7. Tête de tondeuse (25) de la revendication 4, dans laquelle le canal de fil (90, 90') a une première largeur dans la direction axiale (124) sur une partie médiane du canal de fil (90, 90'), et dans laquelle le canal de fil (90, 90') s'élargit jusqu'à une deuxième largeur dans la direction axiale (124) à proximité de chacune des extrémités opposées du canal de fil (90, 90').

8. Tête de tondeuse (25) de la revendication 4, dans laquelle le canal de fil (90, 90') a la même largeur dans la direction axiale (124) sur la totalité du canal de fil (90, 90') .

9. Tête de tondeuse (25) de la revendication 1, dans laquelle le noyau (140, 140') est mobile dans la direction axiale (124) pour libérer le fil de tondeuse (70) de la bobine (130, 130'), mais la bobine (130, 130') ne se déplace pas essentiellement dans la direction axiale (124) en réponse au mouvement du noyau (140, 140') dans la direction axiale (124).

10. Tête de tondeuse (25) de la revendication 1, dans laquelle la bobine (130, 130') a une forme annulaire définissant une périphérie interne qui s'engage en coulissement avec une périphérie externe d'une partie du noyau (140, 140') par rapport au mouvement du noyau (140, 140') dans la direction axiale (124).

11. Tête de tondeuse (25) de la revendication 1, dans laquelle la périphérie interne de la bobine (130, 130') comprend une saillie verticale (180) configurée pour passer dans un canal vertical correspondant (185) formé au niveau de la périphérie externe du noyau (140, 140').

12. Tête de tondeuse (25) de l'une des revendications 4 à 8, dans laquelle des extrémités du canal de fil (90) sont alignées avec un orifice de fil (188) sur chaque côté opposé respectif de la bobine (130, 130'), l'orifice de fil (188) conduisant aux parties de canal (136).

13. Tête de tondeuse (25) de la revendication 12, dans laquelle une longueur du canal de fil (90, 90') est supérieure à une longueur combinée d'extension des parties de canal (136) sur chaque côté opposé respectif de la bobine (130, 130').

14. Tête de tondeuse (25) de l'une des revendications 1 à 11, dans laquelle le noyau (140, 140') comprend une partie supérieure (195) formant un sommet du canal de fil (90, 90') et une partie inférieure séparable (190) formant un fond du canal de fil (90, 90').

15. Tête de tondeuse (25) de l'une des revendications 4 à 8, dans laquelle le canal de fil (90, 90') comporte au moins une courbure le long d'une longueur de celui-ci, la courbure s'étendant dans la direction axiale (124).

16. Tête de tondeuse (25) de l'une des revendications 1 à 15, dans laquelle la bobine (130, 130') et le noyau (140, 140') ont une forme hexagonale, une forme octogonale ou d'autres formes qui sont essentiellement adaptées pour permettre un engagement coulissant dans la direction axiale.

17. Tête de tondeuse (25) de l'une des revendications 1 à 16, dans laquelle l'ensemble de maintien de fil (110') comporte un noyau en deux parties (140').

18. Dispositif de coupe tenu à la main (10) comprenant :
un élément allongé (45) pouvant être saisi le long d'une partie de celui-ci par un opérateur ;
une tête de tondeuse (25) disposée au niveau d'une extrémité de l'élément allongé (45) et configurée de manière à pouvoir tourner pour effectuer une fonction de coupe en utilisant un fil de tondeuse (70) maintenu au niveau d'une partie de la tête de tondeuse (25) ; et
une unité d'alimentation couplée de manière fonctionnelle à la tête de tondeuse (25) pour entraîner sélectivement la rotation de la tête de tondeuse (25) en faisant tourner un arbre, **caractérisé en ce que** la tête de tondeuse (25) est la tête de tondeuse selon l'une des revendications 1 à 17.
